# EUROPÄISCHE PATENTANMELDUNG

(11) **EP 1 647 464 A2**
(43) Veröffentlichungstag der Anmeldung: **19.04.2006**
(21) Anmeldenummer: 05019748.2
(22) Anmeldetag: 12.09.2005
(51) Int. Cl.: B62D 1/181

(54) **Lenksäulen-Höhenverstellvorrichtung**

(30) Priorität: 13.10.2004 DE 102004049960
(71) Anmelder: IMS Gear GmbH, 79871 Eisenbach (DE)
(72) Erfinder: Hofschulte, Wolfram Dipl.-Ing., 79848 Bonndorf (DE); Lohner, Rolf, Dipl.-Ing., 78050 Villingen-Schwenningen (DE); Möhring, Keven, 86879 Wiedergeltingen (DE)
(74) Vertreter: Patentanwälte Westphal, Mussgnug & Partner

(57) **Zusammenfassung**

Die Erfindung bezieht sich auf eine Lenksäulen-Höhenverstellvorrichtung mit einem Basiskörper (1), einer Lenksäulenführung (2) zum Aufnehmen und Führen einer Lenksäule, einem Lenksäulen-Lager (20) zum verschwenkbaren Lagern der Lenksäulenführung (2) relativ zum Basiskörper (1), einem Verstellelement (3) zum Verschwenken der Lenksäulenführung (2) relativ zum Basiskörper (1) und einer Antriebseinrichtung (4) zum Verstellen des Verstellelements (3), wobei die Antriebseinrichtung (4) am Basiskörper angeordnet ist.

## Beschreibung

Die Erfindung bezieht sich auf eine Lenksäulen-Höhenverstellvorrichtung mit den oberbegrifflichen Merkmalen des Patentanspruchs 1.

Aus US 5,275,066 ist eine Lenksäulen-Höhenverstellvorrichtung bekannt. Diese besteht aus einem Basiskörper, welcher als ein einfaches Lagerelement an einem Fahrzeugrahmen fest befestigt ist, einer Lenksäulenführung in Art eines Mantelrohrs zum Aufnehmen und Führen einer Lenksäule, einem Lenksäulen-Lager zum verschwenkbaren Lagern der Lenksäulenführung relativ zum Basiskörper, einem Verstellelement in Form eines rechtwinkligen Hebelsystems zum Verschwenken der Lenksäulenführung relativ zum Basiskörper, wobei das Verstellelement in seinem Winkelabschnitt über ein Verstellelementlager am Basiskörper verschwenkbar gelagert ist, und einer Antriebseinrichtung zum Verstellen des Verstellelements, wobei die Antriebseinrichtung an der Lenksäulenführung befestigt ist.

Aus DE 41 03 202 A1 ist bekannt eine Lenksäule für Kraftfahrzeuge, bei der eine Lenkwelle aus einer Unterwelle und einer Oberwelle, welche durch ein Kreuzgelenk miteinander verbunden sind, in einem Gehäuse aus einem karosseriefesten Untergehäuse und einem demgegenüber um eine Achse quer zur Längsachse der Lenksäule beweglichen Obergehäuse drehbar gelagert sind. Das Untergehäuse und das Obergehäuse sind beide durch motorisch betätigbare und mit einer Verzahnung ineinander greifende Zwischenglieder verstellbar miteinander verbunden. Zwischenglieder aus einem Schneckenradsegment, welches an dem Obergehäuse fest angeordnet ist, liegen mit Mittelpunkt im Achsenkreuz des Kreuzgelenks und sind parallel zur Längsachse der Lenksäule ausgerichtet. Eine Schnecke greift in eine Verzahnung eines Schneckenradsegments ein, wobei die Schnecke an dem Untergehäuse karosseriefest gelagert und motorisch antreibbar ist.

Diese Anordnung besteht aus einer Vielzahl von Einzelkomponenten und ist als Schnecken-Schneckenradsegment-Lösung mit einer Kippachse baulich aufwendig gestaltet.

Weitere Ein- oder Mehrfachspindelantriebe sowie Einzelkomponenten für sich genommen sind beispielsweise aus US 4,925,210, EP 0834437, DE 196 28 520 C2 oder DE 33 22 863 A1 bekannt.

Die Aufgabe der Erfindung besteht darin, eine alternative Lenksäulen-Höhenverstellvorrichtung vorzuschlagen.

Diese Aufgabe wird durch eine Lenksäulen-Höhenverstellvorrichtung mit den Merkmalen des Patentanspruchs 1 gelöst.

Demgemäss ist vorteilhaft insbesondere eine Lenksäulen-Höhenverstellvorrichtung mit einem Basiskörper, einer Lenksäulenführung zum Aufnehmen und Führen einer Lenksäule, einem Lenksäulen-Lager zum verschwenkbaren Lagern der Lenksäulenführung relativ zum Basiskörper, einem Verstellelement zum Verschwenken der Lenksäulenführung relativ zum Basiskörper und einer Antriebseinrichtung zum Verstellen des Verstellelements, wobei die Antriebseinrichtung am Basiskörper angeordnet ist.

Vorteilhafte Ausgestaltungen sind Gegenstand von abhängigen Ansprüchen.

Vorteilhaft ist insbesondere eine Vorrichtung, bei welcher die Antriebseinrichtung ein Schneckengetriebe aufweist.

Vorteilhaft ist insbesondere eine Vorrichtung, bei welcher die Antriebseinrichtung ein zweistufiges, insbesondere selbsthemmendes Schneckengetriebe aufweist.

Vorteilhaft ist insbesondere eine Vorrichtung, bei welcher das Verstellelement über ein Verstellelementlager am Basiskörper verschwenkbar gelagert ist.

Vorteilhaft ist insbesondere eine Vorrichtung, bei welcher das Verstellelement zu dessen Verstellung auf einer Seite des Verstellelementlagers und von dem Verstellelementlager beabstandet mittels eines Schneckradsegments an die Antriebseinrichtung angekoppelt ist.

Vorteilhaft ist insbesondere eine Vorrichtung, bei welcher das Verstellelement und die Antriebseinrichtung zum Verstellen des Verstellelements über eine halbgloboide Aufdoppelung auf ein Schneckenradsegment gekoppelt sind.

Vorteilhaft ist insbesondere eine Vorrichtung, bei welcher das Lenksäulen-Lager am Verstellelement auf der anderen Seite des Verstellelementlagers und von dem Verstellelementlager beabstandet angeordnet ist.

Vorteilhaft ist eine Vorrichtung, bei welcher insbesondere im Fall einer halbgloboiden Aufdoppelung eine Schneckenachse einer in das Schneckenrad eingreifenden Schnecke gegenüber einer aufgespannten Schwenkebene einer Lenksäulenachse bzw. einer Rotationsebene des Schneckenradsegments schräg verläuft und diese durchschneidet.

Vorteilhaft ist insbesondere eine Vorrichtung, mit spielfreien Lagern zum Lagern des Verstellelements und der Lenksäulenführung.

Vorteilhaft ist insbesondere eine Vorrichtung, bei welcher die Antriebseinrichtung und/oder das Verstellelement in Komponenten einer Lenksäule eines Fahrzeugs integriert sind.

Vorteilhaft ist insbesondere eine Vorrichtung, bei welcher die Antriebseinrichtung am Basiskörper angeordnet ist.

Eine solche Lenksäulen-Höhenverstellvorrichtung bietet aufgrund des einfachen und kompakten Aufbaus eine Vielzahl von Vorteilen, wobei eine definierte Verstellgeschwindigkeit und ein definierter Verstellweg, ein minimales oder besser kein Spiel, definierte Verformungsstabilität und definierte Crashanforderungen in einer wirtschaftlichen Lösung umsetzbar sind. Insbesondere kann ein gering dimensionierter elektrischer Antrieb für eine solche Höheneinstellung einer Fahrzeuglenksäulen verwendet werden.

Eine solche Lenksäulen-Höhenverstellvorrichtung stellt eine angepasste Entwicklung mit Blick auf einen geringen Bauraum, geringe erforderliche Verstellkraft der Antriebseinrichtung, eine ausreichend hohe Verstellgeschwindigkeit, Festigkeit, Spiel, Montage und Crashanforderungen dar. Außerdem ermöglicht diese eine Adaptionsfähigkeit während eines weiteren Entwicklungsfortschritts. Das Konzept ist an verschiedenartige Fahrzeugtypen anpassbar. Durch das Verschmelzen von Lenksäulen mit Antriebskomponenten wird ein geringer Teilumfang ermöglicht, was zugleich zu einer kompakten und minimierten Bauweise führt. Vorteilhafterweise kann eine derartige Lenksäulen-Höhenverstellvorrichtung mit Blick auf die Montage Schnittstellen der Montageumfänge modular frei wählbar vorsehen. Durch einen guten Wirkungsgrad kann ein kleiner Elektromotor mit einer nur geringen Stromaufnahme verwendet werden.

Die geringe Anzahl an Drehpunkten mit nur einem einzigen möglichen Spiel am Zahnsegment verhindert eine Verkettung bzw. Addition von Spielwerten. Aufgrund der geringen Anzahl bewegter Teile ergibt sich auch nur ein allenfalls kleines Schwingungspotenzial. Der Aufbau ermöglicht definierte und verspannungsfreie Blockanschläge. Die Antriebseinheit wird bei einer solchen Anordnung zu einem integralen Bestandteil des Kraftsystems. Durch eine Anpassung der Verzahnung auf Resonanzverhalten des Systems ist außerdem die Akustik beeinflussbar, wobei gleichbleibende Hebelverhältnisse beim Betrieb für eine gleichmäßige Geräuschkulisse über den gesamten Verfahrweg und keine Relativbewegungen der Bauteile ermöglichen.

Ein Ausführungsbeispiel wird nachfolgend anhand der Zeichnung näher erläutert. Es zeigen:
- Fig. 1: eine Lenksäulen-Höhenverstellvorrichtung in auseinandergezogener Darstellung der einzelnen Komponenten inkl. Darstellung einer halbgloboiden Aufdoppelung in einer Ausschnittsdarstellung;

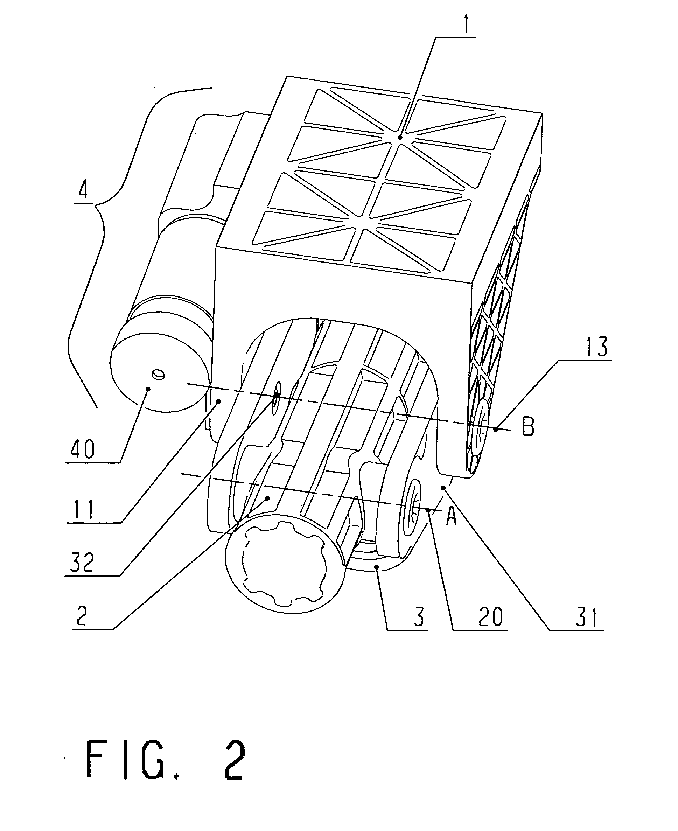

- Fig. 2: zwei perspektivische Ansichtn dieser Lenksäulen-Höhenverstellvorrichtung in zusammengesetztem Zustand; und

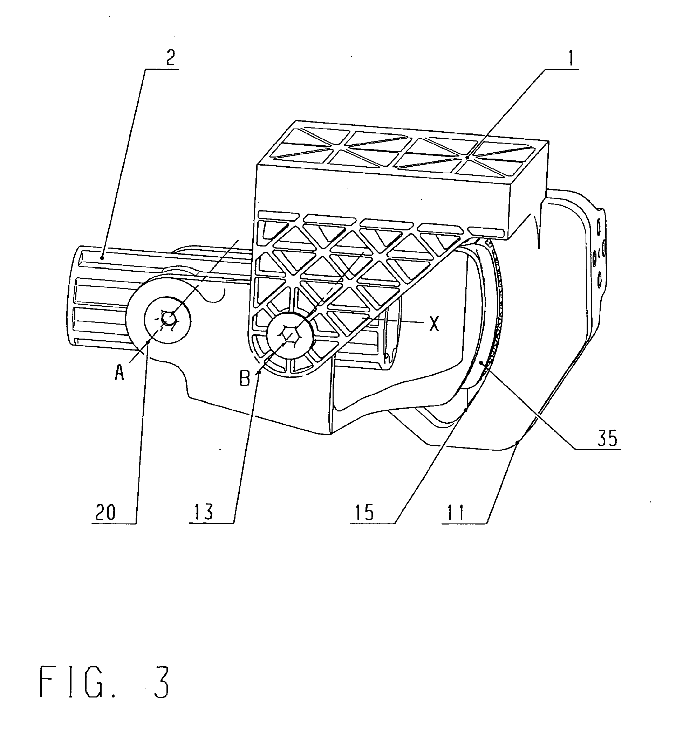

- Fig. 3: eine weitere perspektivische Ansicht dieser Lenksäuen-Höhenverstellvorrichtung.

Wie aus den Figuren ersichtlich, besteht eine Lenksäulen-Höhenverstellvorrichtung aus einer Vielzahl von Einzelkomponenten, von denen nachfolgend im wesentlichen diejenigen beschrieben werden, welche für das Verständnis der Anordnung und Funktionsweise der bevorzugten Lenksäulen-Höhenverstellvorrichtung wichtig sind.

In einem Basiskörper 1 ist eine Lenksäulenführung 2 über ein Verstellelement 3 gelagert. Zur automatischen Verstellung der Lenksäulenführung 2 relativ zum Basiskörper 1 dient eine Antriebseinrichtung 4, welche seitlich am Basiskörper 1 befestigt ist.

Der Basiskörper 1 bildet ein Gehäuse für die Lenksäulenführung 2 aus, wobei die Lenksäulenführung 2 in einer Ebene senkrecht zu ihrer Längsachse X verschwenkbar gelagert ist. Der Basiskörper 1 ist beim dargestellten Ausführungsbeispiel im wesentlichen umgekehrt U-förmig mit seinen Seitenwandungen 11 parallel zur Längsachse X ausgebildet. Insbesondere auch ein umgekehrt ausgerichteter Aufbau, d. h. eine U-förmige Anordnung ist umsetzbar. Vorzugsweise wird die Lenksäulen-Höhenverstellvorrichtung mit einer Führung im Fahrzeug eingebaut. Vorzugsweise ist die Lenksäulen-Höhenverstellvorrichtung über den Basiskörper mit dem Fahrzeugrahmen gekoppelt.

In den Seitenwänden 11 des Basiskörpers 1 ist dem in der Zeichnung vorderseitigen Ende des Basiskörpers 1 benachbart ein Verstellelementlager 13 mit einer Verstellelementlagerachse B senkrecht zur Längsachse X angeordnet. Dazu führen Durchgangsöffnungen 12 durch die Seitenwandungen 11 des Basiskörpers 1. Die Verstellelementlagerachse B verläuft parallel und beabstandet zu der Lenksäulen-Lagerachse A durch die Gesamtanordnung.

Durch das Verstellelementlager 13 wird das Verstellelement 3, welches eine Art Bügel ausbildet, senkrecht zur Längsachse X im Basiskörper 1 gelagert. Das Verstellelement 3 ist dadurch in einer Ebene verschwenkbar, in welcher die Lenksäulenführung 2 verschwenkbar ist. Das Verstellelement 3 ist vorzugsweise im wesentlichen U-förmig mit zwei Seitenwandungen 31 ausgebildet. Die Anordnungen der Seitenwandungen 31 des Verstellelements 3 ist dabei so gewählt, dass die Außenseiten der Seitenwandungen 31 des Verstellelements 3 innenseitig der Seitenwandungen 11 des Basiskörpers 1 angeordnet sind, wobei Relativbewegungen des Verstellelements 3 und des Basiskörpers 1 möglichst spielfrei ermöglicht werden. Das Verstellelement 3 erstreckt sich mit seinen Seitenwandungen 31 dabei parallel zur Lenksäulenführung 2 und den Seitenwandungen 11 des Basiskörpers 1 in Richtung der Längsachse X. Zwischen dem in der Zeichnung vorderen und hinteren Endabschnitt des Verstellelements 3 sind in dessen beiden Seitenwandungen 31 entsprechende Lagerelemente, insbesondere Durchgangsöffnungen 32 zur Aufnahme des Lagers 13 ausgebildet. Nach dem Einsetzen des Verstellelements 3 in den Basiskörper 1 sind diese beiden zueinander um die Verstellelementlagerachse B herum verschwenkbar.

Im in der Zeichnung vorderseitigen Abschnitt der Seitenwandungen 31 des Verstellelements 3 sind Lagerpunkte 33, insbesondere Durchgangsöffnungen 33 zum Aufnehmen eines Lenksäulen-Lagers 20 senkrecht zur Längsachse X angeordnet. Die Lenksäulenführung 2, welche vorzugsweise in Art eines Rohres ausgebildet ist und zum Aufnehmen und Führen einer Lenksäule dient, weist in ihrem seitlichen Umfangsbereich entsprechende Lagerpunkte, insbesondere Öffnungen 21 zur Aufnahme von Elementen des Lenksäulen-Lagers 20 auf. Im zusammengebauten Zustand ist die Lenksäulenführung 2 durch das Lenksäulen-Lager 20 im vorderseitigen Abschnitt des Verstellelements 3 um die Lenksäulen-Lagerachse A verschwenkbar gelagert. Außerdem ist die Anordnung aus Lenksäulenführung 2 und Verstellelement 3 um die Verstellelementlagerachse B des Verstellelementlagers 13 zusätzlich relativ zum Basiskörper 1 verschwenkbar. Die Lenksäulen-Lagerachse B und die Verstellelementlagerachse A verlaufen parallel zueinander.

Zum automatischen Verschwenken dieser Gesamtanordnung aus Verstellelement 3 und Lenksäulenführung 2 dient die Antriebseinrichtung 4, welche vorzugsweise seitlich außen an einer der Seitenwandungen 11 des Basiskörpers 1 montiert ist. Die Antriebseinrichtung 4 weist in üblicher Art und Weise einen elektromotorischen Antrieb 40 auf, dessen Antriebswelle und Längsachse in der Verschwenkungsebene der Lenksäulenführung 2 und je nach deren Verschwenkungsstellung gegebenenfalls in einer Position parallel zur Längsachse X ausgerichtet ist. Der Antrieb 40 ist an einem Antriebsgehäuse 44 befestigt, wobei eine Antriebswelle mit einer Antriebsschnecke 41 in das Antriebsgehäuse 44 hineinragt. Die Antriebsschnecke 41 treibt eine zweite Antriebsstufe 43 mit einer weiteren Schnecke 42 an. Die zweite Antriebsstufe 43 ist dabei im wesentlichen senkrecht zur Längsachse der Antriebswelle und der Antriebsschnecke 41 innerhalb des Antriebsgehäuses 44 gelagert.

Mittels der weiteren Schnecke 42 der zweiten Antriebsstufe 43 wird ein Schneckenradsegment bzw. Zahnsegment 35 angetrieben, welches Bestandteil des Verstellelements 3 ist. Das Schneckenrad- bzw. Zahnsegment 35 wird dabei durch ein einstückiges oder bevorzugt separates und mit einer entsprechenden Seitenwandung 31 des Verstellelements 3 fest verbundenes Bauelement ausgebildet. Das das Schneckrad 35 ausbildende Bauelement ragt dabei vom in der Zeichnung rückseitigen Abschnitt des Verstellelements 3 in seitlicher Richtung weg in eine Öffnung 15, welche entsprechend in der benachbarten Seitenwandung 11 des Basiskörpers 1 zwischen dem Verstellelement 3 und der Antriebseinrichtung 4 ausgebildet ist.

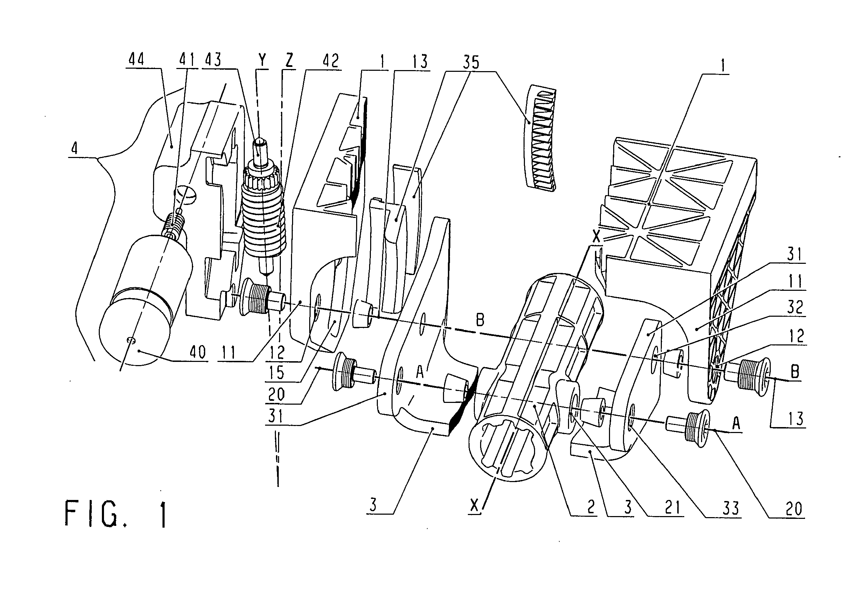

Die Öffnung 15 in der Seitenwandung 11 des Basiskörpers 1 ist dabei zum Hinein- bzw. Hindurchführen des Schneckenrad- bzw. Zahnsegments 35 vorzugsweise bogenförmig ausgebildet. Auch das Schneckenrad- oder Zahnsegment 35, welches seitlich von dem Verstellelement 3 absteht, ist entsprechend bogenförmig ausgebildet. An der in der Zeichnung rückseitigen Fläche ist die Zahnung des Schneckenrad- bzw. Zahnsegments 35 ausgebildet, wie dies mittels der Ausschnittsdarstellung in Fig. 1 skizziert ist. Diese Zahnung liegt außenseitig der Seitenwandung 11 und greift seitlich in die davor angeordnete weitere Schnecke 42 der zweiten Antriebsstufe 43 ein. Bevorzugt wird eine entsprechend halbgloboide Aufdoppelung auf das Schnekenrad- bzw. Zahnsegment 35, bei der die Zähne nur im Bereich des unmittelbaren Zahneingriffs vollständig ausgebildet sind.

Eine Schneckenachse Y der weiteren Schnecke 42 verläuft in der Zeichnung nicht senkrecht sondern verläuft gegenüber einer Senkrechten Z verschwenkt. Die Schneckenachse Y der weiteren Schnecke 42 schneidet dadurch in Verlängerung eine aufgespannte Schwenkebene der Lenksäulenachse X bzw. die Rotationsebene des Schneckenrad- bzw. Zahnsegments 35. Die weitere Schnecke 42 verläuft dadurch schräg zu dem Schneckenradsegment 35 ausgerichtet.

Ein Antreiben der Antriebsschnecke 41 durch den Antrieb 40 bewirkt somit ein Antreiben der weiteren Schnecke 42 und darüber ein Verstellen des Schneckrad- bzw. Zahnsegments 35. Dadurch wird das Verstellelement 3 um das Verstellelementlager 13 verschwenkt, wobei außerdem die Lenksäulenführung 2 über das Lenksäulen-Lager 20 relativ zu dem Verstellelement 3 und zu dem Basiskörper 1 verschwenkt wird.

Der Verstellantrieb besteht bei der besonders bevorzugten Ausführungsform aus einem zweistufigen, selbsthemmenden Schneckengetriebe. An der zweiten Antriebsstufe 43 erfolgt die Kraftübertragung mittels eines Schneckenrad- bzw. Zahnsegments 35 auf das Verstellelement 3, dessen vordere Lagerung sich in den Seitenwandungen 11 des Basiskörpers 1 befindet. Um diese Lagerstelle 13, B herum wird das Verstellelement 3 in üblicherweise vertikaler Richtung verschwenkt, wobei die Verschwenkbewegung über die zweite, in der Zeichnung vordere und im eingebauten Zustand üblicherweise hintere Lagerstelle, d. h. das Lenksäulen-Lager 20, A, auf die Lenksäulenführung 2, in welcher die Lenksäule gelagert ist, übertragen wird. Diese Anordnung ermöglicht somit eine Verstellung der Lenksäule über zwei Dreh- bzw. Lagerachsen A, B zwischen der Lenksäulenführung 2 und dem Verstellelement 3 bzw. zwischen dem Verstellelement 3 und dem Basiskörper 1 mit vorzugsweise spielfreien Lagerelementen 20, 13. Dadurch wird eine Spielfreiheit ohne eine Verkettung von Spielwerten ermöglicht. Von besonderem Vorteil ist die halbgloboide Aufdoppelung auf das Schneckenrad- bzw. Zahnsegment 35, wodurch bei hoher Zahnstabilität eine Spielfreiheit ermöglicht wird, indem das Schneckenrad- bzw. Zahnsegment 35 in der Öffnung 15 entsprechend dimensioniert und aufeinander abgestimmt gelagert ist. Durch die Integration einzelner Antriebselemente in die Komponenten der Lenksäule bzw. der Lenksäulenlagerung wird gegenüber bekannten Ausführungsformen eine Bauteileersparnis ermöglicht. Außerdem trägt die Anordnung von Antrieb 4 und Verstellelement 3 in der Gesamtanordnung zur Steifigkeit der Lenksäulenaufnahme bei, da ein geschlossenes Kräftesystem ermöglicht wird.

## Patentansprüche

1. Lenksäulen-Höhenverstellvorrichtung mit
- einem Basiskörper (1),
- einer Lenksäulenführung (2) zum Aufnehmen und Führen einer Lenksäule,
- einem Lenksäulen-Lager (20) zum verschwenkbaren Lagern der Lenksäulenführung (2) relativ zum Basiskörper (1),
- einem Verstellelement (3) zum Verschwenken der Lenksäulenführung (2) relativ zum Basiskörper (1) und
- einer Antriebseinrichtung (4) zum Verstellen des Verstellelements (3),
**dadurch gekennzeichnet, dass**
- die Antriebseinrichtung (4) am Basiskörper (1) angeordnet ist.

2. Vorrichtung nach Anspruch 1, bei welcher die Antriebeinsrichtung (4) ein Schneckengetriebe (41; 42) aufweist.

3. Vorrichtung nach Anspruch 1 oder 2, bei welcher die Antriebseinrichtung (4) ein zweistufiges, insbesondere selbsthemmendes Schneckengetriebe (41; 42) aufweist.

4. Vorrichtung nach einem vorstehenden Anspruch, bei welcher das Verstellelement (3) über ein Verstellelementlager (13) am Basiskörper (1) verschwenkbar gelagert ist.

5. Vorrichtung nach Anspruch 4, bei welcher das Verstellelement (3) zu dessen Verstellung auf einer Seite des Verstellelementlagers (13) und von dem Verstellelementlager (13) beabstandet mittels eines Schneckradsegments (35) an die Antriebseinrichtung (4) angekoppelt ist.

6. Vorrichtung nach Anspruch 4 oder 5, bei welcher das Verstellelement (3) und die Antriebseinrichtung (4) zum Verstellen des Verstellelements (3) über eine halbgloboide Aufdoppelung auf ein Schneckenradsegment (35) gekoppelt sind.

7. Vorrichtung nach Anspruch 5 oder 6, bei welcher das Lenksäulen-Lager (20) am Verstellelement (3) auf der anderen Seite des Verstellelementlagers (13) und von dem Verstellelementlager beabstandet angeordnet ist.

8. Vorrichtung nach einem vorstehenden Anspruch, bei welcher eine Schneckenachse (Y) einer in das Schneckenradsegment eingreifenden Schnecke (42) gegenüber einer aufgespannten Schwenkebene einer Lenksäulenachse (X) bzw. einer Rotationsebene des Schneckenradsegments (35) schräg verläuft und diese durchschneidet.

9. Vorrichtung nach einem vorstehenden Anspruch mit spielfreien Lagern (13, 20) zum Lagern des Verstellelements (3) und der Lenksäulenführung (2).

10. Vorrichtung nach einem vorstehenden Anspruch, bei welcher die Antriebseinrichtung (4) und/oder das Verstellelement (3) in Komponenten einer Lenksäule eines Fahrzeugs integriert sind.

11. Vorrichtung nach einem vorstehenden Anspruch, bei welcher die Antriebseinrichtung (4) am Basiskörper (1) angeordnet ist.
